# EUROPÄISCHE PATENTSCHRIFT

(11) **EP 2 881 612 B1**
(45) Veröffentlichungstag und Bekanntmachung des Hinweises auf die Patenterteilung: **02.10.2019**
(21) Anmeldenummer: 14193454.7
(22) Anmeldetag: 17.11.2014
(51) Int. Cl.: F16F 1/373

(54) **Aggregatelager**
Aggregate bearing
Palier de groupe

(30) Priorität: 03.12.2013 DE 102013113410
(43) Veröffentlichungstag der Anmeldung: 10.06.2015
(73) Patentinhaber: Vibracoustic GmbH, 64293 Darmstadt (DE)
(72) Erfinder: Simuttis, Arnold, 55545 Bad Kreuznach (DE); Hettler, Werner, 68309 Mannheim (DE)
(74) Vertreter: Flügel Preissner Schober Seidel

(56) Entgegenhaltungen:
- DE-C- 158 064
- FR-A- 816 771
- FR-A1- 2 660 383
- FR-A1- 2 973 088
- US-A- 3 957 127

## Beschreibung

Die Erfindung betrifft ein Aggregatelager, das ein Traglager und ein Auflager umfasst, welche durch einen ersten Federkörper miteinander verbunden sind.

Das Aggregatelager ist zum Abstützen eines Aggregats, wie beispielsweise einem Verbrennungsmotor, in allen drei Raumrichtungen d.h. in x-Richtung, y-Richtung und z-Richtung ausgebildet. Solche Aggregatelager sind allgemein bekannt und werden beispielsweise zur Lagerung eines Vebrennungsmotors in einem Kraftfahrzeug eingesetzt.

Die Grundform eines derartigen Aggregatelagers wird generell durch zwei Faktoren bestimmt, nämlich einerseits die erforderlichen Federraten des Aggregatelagers zur Abstützung in die drei genannten Raumrichtungen sowie andererseits durch die Größe bzw. Form des Einbauraums, in dem das Aggregatelager angeordnet werden soll.

In Göbel, E.F. "Gummifedern, Berechnung und Gestaltung, Konstruktionshandbücher Nr. 7", 3. Auflage, Springer-Verlag, Berlin, Heidelberg, New York (1969) oder Battermann, W. et. al, "Elastomere Federungen, elastische Lagerungen", Verlag Wilhelm Ernst und Sohn, Berlin, München (1982) sind klassische Formen von Aggregatlagern beschrieben.

Die Größe des Einbauraumes für Aggregatlager ist in manchen Fällen stark begrenzt, beispielsweise dadurch, dass es sich bei dem zu lagernden Aggregat um einen quer eingebauten Hybridantrieb handelt, der aus einem Verbrennungsmotor und einem Elektromotor aufgebaut ist, wobei der Hybridantrieb mit dem Getriebe nebeneinander im Motorraum einer möglichst aerodynamisch strömungsgünstigen Kraftfahrzeugskarosserie eingebaut werden soll. Ähnliche Probleme treten bei 5- oder 6-Zylinder-Reihenmotoren auf, die quer eingebaut sind.

Für diese beispielhaft genannten Einbausituationen sind die aus dem Stand der Technik bekannten Aggregatelager nur begrenzt geeignet, da die Höhe der benötigten Federraten aufgrund des begrenzten Einbauraumes, insbesondere in y-Richtung, durch den Federkörper nur schwer realisiert werden kann.

Aus FR 816 771 A geht ein elastisches Lager für ein Kraftfahrzeug hervor, das zwischen einem Chassis und einer Karosserie angeordnet wird. Das Lager umfasst ein erstes Element, das Bestandteil des Chassis ist, ein zweites Element, das Bestandteil der Karosserie ist, drei ringförmige elastomere Federkörper und mehrere Metallelemente, die die Federkörper miteinander verbinden. Einer der drei Federkörper nimmt Beanspruchungen in transversaler Richtung, und die anderen beiden Federkörper nehmen Beanspruchungen in longitudinaler Richtung auf.

Aus US 3,957,127 A und FR 2 973 088 A1 gehen Aggregatelager mit einem Aufnahme- und einem Traglager hervor, zwischen denen zwei Federkörper angeordnet sind, die in unterschiedliche Raumrichtungen wirken.

In FR 2 660 383 A1 ist ein elastisches Lager mit einem Traglager und einem Auflager offenbart, die durch einen ersten Federkörper miteinander verbunden sind. Der erste Federkörper dient zur Abstützung des Auflagers in eine z-Richtung. Das Lager weist ferner einen zweiten Federkörper auf, der das Auflager in eine y-Richtung und an einem die beiden Federkörper umgebenden Gehäuse abstützt.

In der Druckschrift DE 158 064 C sind weitere Ausführungsformen von solchen Vorrichtungen gezeigt.

Aufgabe der Erfindung ist es daher, ein Aggregatelager vorzuschlagen, das ausreichend hohe Federraten in y-Richtung bereitstellen kann, selbst wenn der Einbauraum insbesondere in y-Richtung stark begrenzt ist.

Diese Aufgabe wird durch ein Aggregatelager mit den Merkmalen des Anspruches 1 gelöst.

Vorteilhafte Ausgestaltungen der Erfindung sind Gegenstand der abhängigen Ansprüche.

Unter x-Richtung soll im Folgendem die Richtung verstanden werden, in die sich ein Fahrzeug bewegt. Y-Richtung meint dabei eine Richtung quer zur Fahrtrichtung. Unter z-Richtung wird eine Erstreckungsrichtung in der Höhe des Fahrzeuges verstanden.

Das erfindungsgemäße Aggregatelager weist ein Traglager und ein Auflager auf, die durch einen ersten Federkörper miteinander verbunden sind. Dabei ist der erste Federkörper zur Abstützung des Auflagers in eine z-Richtung ausgebildet. Weiterhin ist ein zweiter Federkörper zur Abstützung des Auflagers in eine y-Richtung vorgesehen, wobei das Auflager durch den zweiten Federkörper elastisch nachgiebig an einem die beiden Federkörper umgebenden Gehäuse abgestützt ist. Der zweite Federkörper weist wenigstens zwei Pufferpaare auf, wobei ein erstes Pufferpaar gegenüber einem zweiten Pufferpaar in x-Richtung versetzt angeordnet ist. Jedes Pufferpaar weist wenigstens zwei quader- oder stollenförmig ausgebildete Puffer auf, die in z-Richtung versetzt angeordnet sind und jeweils unter elastischer Vorspannung an gegenüberliegenden Gehäusewänden des Gehäuses anliegen, wobei die Puffer das Auflager in entgegen gerichtete y-Richtungen abstützen.

Der erste Federkörper und der zweite Federkörper sind dabei räumlich voneinander getrennt zueinander angeordnet und voneinander entkoppelt.

Dadurch ergibt sich auch eine Entkopplung der Funktionen des ersten Federkörpers und des zweiten Federkörpers, das heißt der Abstützung einerseits in z-Richtung durch den ersten Federkörper und der Abstützung andererseits in y-Richtung durch den zweiten Federkörper. Hierdurch ergibt sich eine schmale Bauweise des Aggregatelagers, so dass dieses insbesondere zum Einbau in einen in y-Richtung begrenzten Einbauraum besonders gut geeignet ist, wobei die erforderlichen Federraten in allen Raumrichtungen erzielt werden können. Durch Vorsehen von Pufferpaaren kann eine gleichmäßigere Abstützung in y-Richtung entlang der x-Richtung und somit ein verbessertes Spannungsgleichgewicht erzielt werden.

Vorzugsweise liegt der zweite Federkörper unter elastischer Vorspannung an dem Gehäuse an.

Liegen vorzugsweise wenigstens zwei Puffer in entgegen gerichtete y-Richtungen an dem Gehäuse unter elastischer Vorspannung an, kann eine Ausrichtung eines Kernes des Aggregatelagers in einem Spannungsgleichgewicht innerhalb des Gehäuses realisiert werden.

Vorteilhaft weist das Gehäuse in dem Bereich, in dem die Puffer das Auflager an dem Gehäuse abstützen, Vertiefungen auf, in die die Puffer einliegen. Hierdurch wird die Lage der Puffer fixiert. Bei großen Auslenkbewegungen in z-Richtung ist jedoch eine Bewegung möglich, um Beschädigungen der Puffer zu vermeiden.

Vorteilhaft weist das Gehäuse eine reibungserhöhende Innenwand auf. Hierdurch wir die Lage der Puffer fixiert. Bei großen Auslenkbewegungen in z-Richtung ist jedoch eine Bewegung möglich, um Beschädigungen der Puffer zu vermeiden.

Bevorzugt weisen die Puffer gegenüberliegend zu dem Bereich, an dem sie das Auflager gegen das Gehäuse abstützen, Radialansätze als Anschlagpuffer in y-Richtung und/oder z-Richtung auf.

Vorteil der Anschlagpuffer ist eine vorzugsweise Begrenzung extremer Auslenkbewegungen der Puffer in z-Richtung und/oder y-Richtung entgegengesetzt zu der y-Richtung, in die sie das Aggregatelager abstützen sollen.

So wird vorzugsweise vermieden, dass die Puffer unerwünscht hohen mechanischen Belastungen ausgesetzt sind.

Weiter vorteilhaft sind die Puffer in einem Rücksprung des ersten Federkörpers in x-Richtung eingebettet. So kann vorteilhaft eine besonders kompakte Ausgestaltung des Aggregatelagers auch in x-Richtung erzielt werden. Der erste Federkörper kann eine rechteckförmige, runde, konusförmige oder ring-förmige Tragfeder aufweisen. Diese Tragfedern können sowohl bei einem elasti-schen Lager als auch bei einem hydraulisch dämpfenden Lager zum Einsatz kommen.

Vorzugsweise weist der erste Federkörper eine rechteckförmige Grundfläche auf und umfasst insbesondere zwei keilförmig angeordnete Teilkörper. Durch die keilförmige Ausgestaltung der Teilkörper kann der erste Federkörper vorteilhaft zur Abstützung sowohl in x-Richtung als auch in z-Richtung wirken.

Vorzugsweise ist wenigstens ein Anschlagpuffer vorgesehen, der die Auslen-kung des Auflagers in z-Richtung begrenzt.

Besonders bevorzugt ist an einer Grundplatte des Traglagers ein erster Anschlagpuffer vorgesehen und/oder ist an dem Auflager gegenüberliegend zu der Grundplatte ein zweiter Anschlagpuffer vorgesehen.

Durch das Vorsehen eines oder zweier Anschlagpuffer kann eine extreme Auslenkung des Aggregatelagers in z-Richtung vorteilhaft begrenzt werden.

Ist ein Anschlagpuffer an einer Grundplatte vorgesehen, kann eine Überlast auf den ersten Federkörper vorteilhaft vermieden werden. Denn bevor der erste Federkörper unerwünscht hohen mechanischen Belastungen durch den Kontakt mit der Grundplatte ausgesetzt ist, gelangt der erste Federkörper zunächst mit den ersten Anschlagpuffern in Berührung.

Vorteilhaft ist der erste Anschlagpuffer in einem Raum angeordnet, der durch die beiden keilförmig angeordneten Teilkörper des ersten Federkörpers gebildet ist.

Deshalb steht für die Anordnung des ersten Anschlagpuffers vorzugsweise mehr Bauraum zur Verfügung als wenn er am Kern des Aggregatelagers angeordnet wäre.

Weiter kann ein zweiter Anschlagpuffer gegenüberliegend zu dem ersten Anschlagpuffer in z-Richtung am anderen Ende des Aggregatelagers vorgesehen sein, wobei der zweite Anschlagpuffer ebenfalls vorteilhaft verhindert, dass der Federkörper unerwünscht hohen mechanischen Belastungen ausgesetzt ist.

Vorteilhaft sind der erste und der zweite Federkörper einstückig aus einem elastomeren Werkstoff hergestellt. Weiter vorteilhaft ist wenigstens auch der erste Anschlagpuffer, insbesondere auch der zweite Anschlagpuffer, einstückig mit den beiden Federkörpern aus dem elastomerem Werkstoff hergestellt. Dadurch wird vorteilhaft die Montage des Aggregatelagers vereinfacht.

Abweichend davon besteht die Möglichkeit, dass die Federkörper, die Puffer und die Anschlagpuffer aus für den jeweiligen Anwendungsfall besonderen geeigneten Werkstoffen bestehen. Die Federkörper können dabei aus unterschiedlichen gummielastischen Werkstoffen bestehen, die zum Beispiel in Zweikomponenten-Spritzverfahren vulkanisiert werden.

Vorzugsweise ist zum einstückigen Ausbilden der Elemente, nämlich der Federkörper und/oder des/der Anschlagpuffer eine Ummantelung aus einem elastomeren Werkstoff vorgesehen, der die Federkörper und den/die Anschlagpuffer ummantelt.

Bevorzugt weist das Auflager eine Aufnahme für einen mit dem Aggregat verbindbaren Tragarm auf. Die Aufnahme ist dabei vorteilhaft in einem Kern des Aggregatelagers angeordnet.

Ein Ausführungsbeispiel der Erfindung wird nachfolgend anhand der beigefügten schematischen Zeichnungen näher erläutert. Darin zeigt:
- Fig. 1: einen Vertikalschnitt durch ein erfindungsgemäßes Aggregatelager;
- Fig. 2: eine Schnittansicht entlang der Linie II-II in Fig. 1;
- Fig. 3: eine Schnittansicht entlang der Linie III-III in Fig. 1;
- Fig. 4: eine Schnittansicht entlang der Linie IV-IV in Fig. 1;
- Fig. 5: eine Schnittansicht entlang der Linie V-V in Fig. 1;
- Fig. 6: eine Ansicht entlang der y-Richtung von außen auf das Aggregatlager aus Fig. 1 mit umhüllendem Gehäuse;
- Fig. 7: die Ansicht entlang der y-Richtung aus Fig. 6, wobei das Gehäuse nicht gezeigt ist;
- Fig. 8: eine Schnittansicht entlang der Linie VIII-VIII in Fig. 7;
- Fig. 9: eine Schnittansicht entlang der Linie IX-X in Fig. 7; und
- Fig. 10: eine Schnittansicht entlang der Linie X-X in Fig. 7.

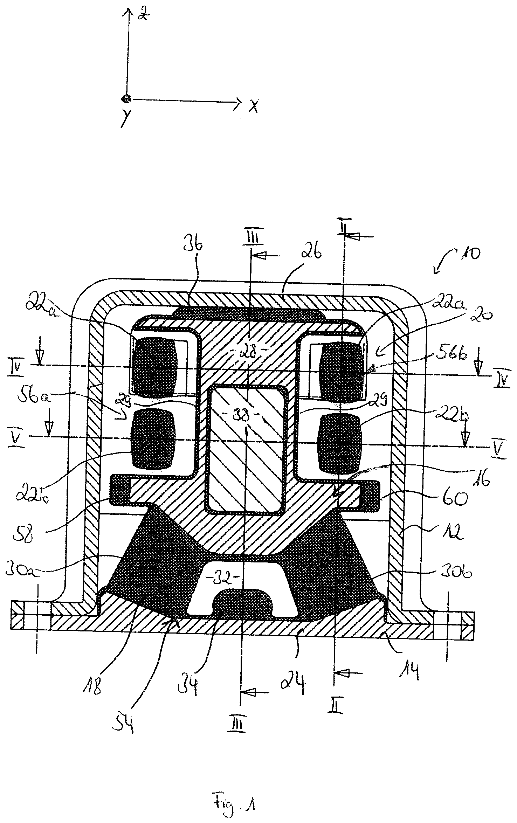

Fig. 1 zeigt eine Ansicht auf das Aggregatelager 10 innerhalb eines Gehäuses 12.

Das Aggregatelager 10 weist ein Traglager 14 und ein Auflager 16 auf, die durch einen ersten Federkörper 18 miteinander verbunden sind. Weiter ist ein zweiter Federkörper 20 vorgesehen, der mehrere Puffer 22a, 22b aufweist. Die beiden Federkörper 18, 20 sind jeweils aus einem elastomeren Werkstoff hergestellt.

Das Aggregatelager 10 erstreckt sich von einer das Traglager 14 bildenden Grundplatte 24 in eine z-Richtung bis zu einem oberen Abschluss 26 des Gehäuses 12.

Auf dem Traglager 14 sitzt der erste Federkörper 18, der einen Kern 28 des Auflagers 16 abstützt.

In dem Kern 28 sind Rücksprünge 29 in x-Richtung angeordnet, in die die Puffer 22 eingebettet sind.

Der erste Federkörper 18 weist zwei keilförmig angeordnete Teilkörper 30a, 30b auf, die zwischen sich einen Raum 32 begrenzen, in dem ein erster Anschlagpuffer 34 angeordnet ist. Der Anschlagpuffer 34 ist mit der Grundplatte 24 verbunden.

Gegenüberliegend zu der Grundplatte 24 ist an dem Kern 28 ein zweiter Anschlagpuffer 36 anvulkanisiert.

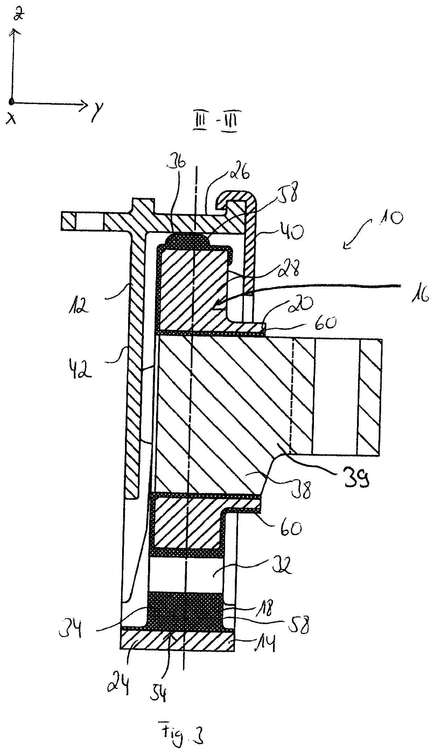

Der Kern 28 des Aggregatelagers 10 weist eine Aufnahme 38 für einen mit einem Aggregat verbindbaren Tragarm 39 (gezeigt in Fig. 3) auf. Der Tragarm 39 wird in y-Richtung in die Aufnahme 38 eingeführt.

Der zweite Federkörper 20 weist zwei Pufferpaare 56a,56b auf, die in x-Richtung versetzt angeordnet sind. Jedes Pufferpaar 56a,56b besteht aus zwei stollenförmigen Puffern 22a, 22b, die in z-Richtung versetzt angeordnet sind.

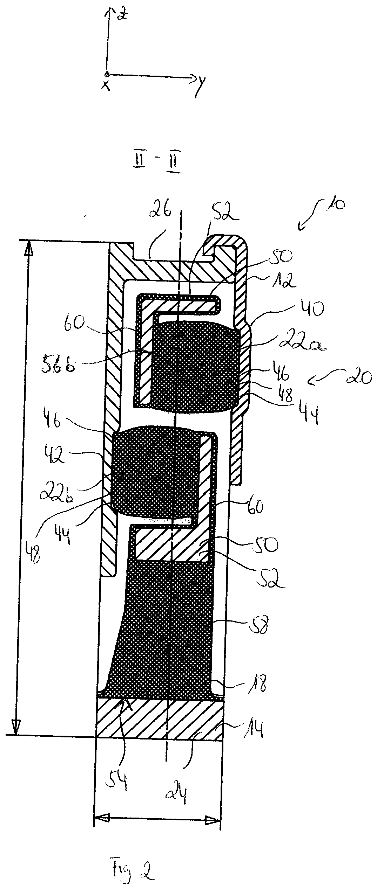

Fig. 2 zeigt eine Schnittansicht entlang der Linie II-II in Fig. 1. Hier ist insbesondere die Anordnung der Puffer 22a, 22b des Pufferpaars 56b in z- und y-Richtung dargestellt. Die Puffer 22a, 22b sind in z-Richtung versetzt zueinander angeordnet und liegen jeweils unter elastischer Vorspannung an gegenüberliegenden Gehäusewänden 40, 42 des Gehäuses 12 an. Somit stützen die Puffer 22a, 22b das Auflager 16 in entgegen gesetzte y-Richtungen an dem Gehäuse 12 ab.

In dem Bereich 44, in dem die Puffer 22a, 22b das Auflager 16 an dem Gehäuse 12 abstützen, weist das Gehäuse 12 Vertiefungen 46 auf, in die die Puffer 22a, 22b einliegen. In diesem Bereich 44 weist das Gehäuse 12 außerdem eine reibungserhöhende Innenwand 48 auf, um die Puffer 22a, 22b zu positionieren. Wenn die Puffer 22a, 22b extremen z-Auslenkungen ausgesetzt sind, können diese jedoch aus den Vertiefungen 46 heraus - und wieder hineingleiten.

Gegenüber dem Bereich 44, an dem die Puffer 22a, 22b das Auflager 16 gegen das Gehäuse 12 abstützen, weisen die Puffer 22a, 22b Radialansätze 50 auf. Diese dienen als dritte Anschlagspuffer 52 sowohl in z-Richtung als auch in y-Richtung und verhindern, dass die Puffer 22a, 22b bei extremen Auslenkungen in z-Richtung oder in y-Richtung an das Gehäuse 12 anschlagen und dadurch verschleißen.

Aus Fig. 2 geht weiter hervor, dass der erste Federkörper 18 im Wesentlichen eine rechteckförmige Grundfläche 54 aufweist.

Fig. 3 zeigt eine Schnittansicht entlang der Linie III-III in Fig.1, das heißt durch den Kern 28 des Aggregatelagers 10.

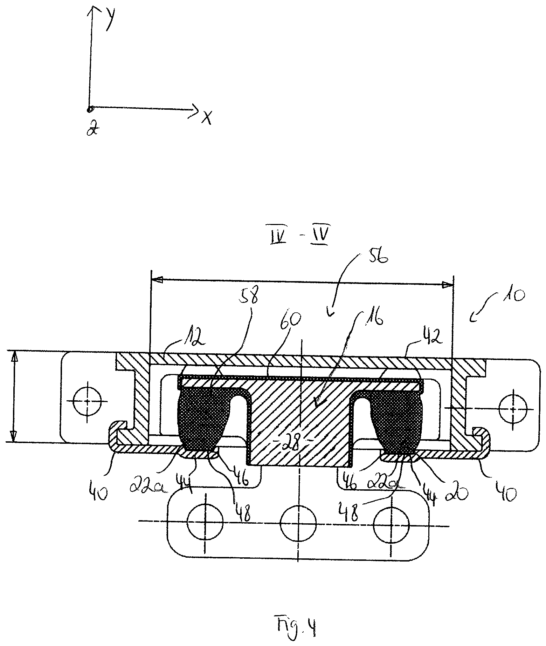

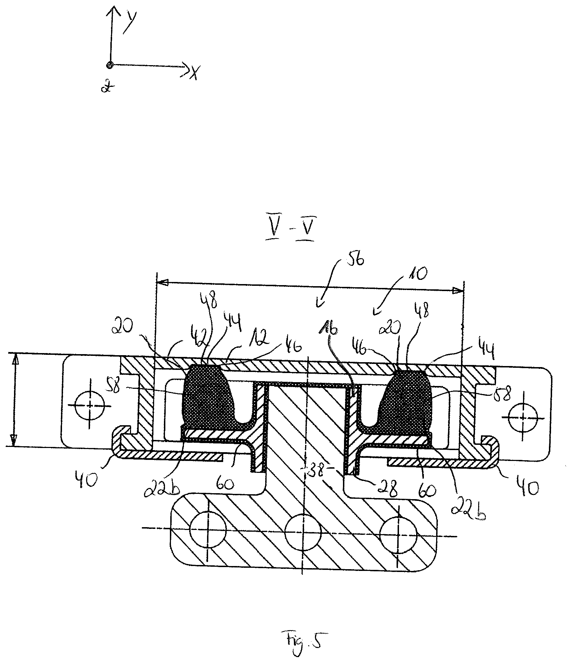

Fig. 4 und 5 zeigen eine Schnittansichten entlang der Linie IV-IV bzw. der Linie V-V in Fig. 1. Darin ist zu sehen, dass die Puffer 22a, 22b von verschiedenen Pufferpaaren 56a, 56b das Auflager 16 jeweils in einer y-Richtung abstützen.

Im Wesentlichen sind die Puffer 22a, 22b quaderförmig, insbesondere stollenförmig, ausgebildet. In der vorliegenden Ausführungsform sind der erste Federkörper 18, der zweite Federkörper 20, gebildet aus den Pufferpaaren 56a, 56b, und die Anschlagpuffer 34, 36 einstückig aus dem elastomeren Werkstoff 23 gebildet. Um die Elemente miteinander zu verbinden, ist eine Ummantelung 60 vorgesehen, die die Federkörper 18, 20 und die Anschlagpuffer 34, 36 umgibt. Insbesondere ist in Fig. 3 zu sehen, dass der Kern 28 sowohl an seiner Außenseite als auch im Bereich der Aufnahme 38 mit der Ummantelung 60 versehen ist.

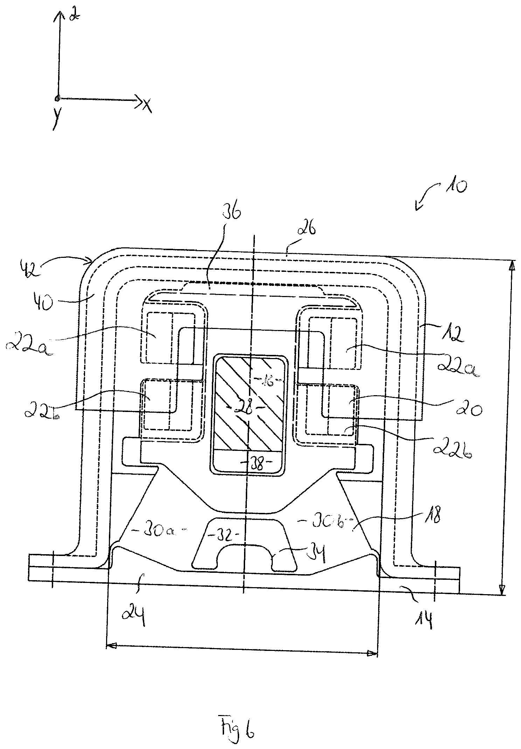

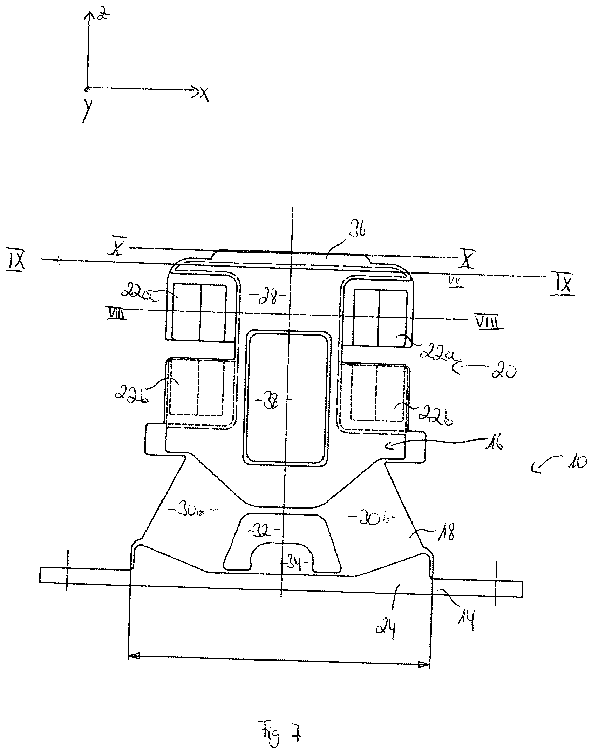

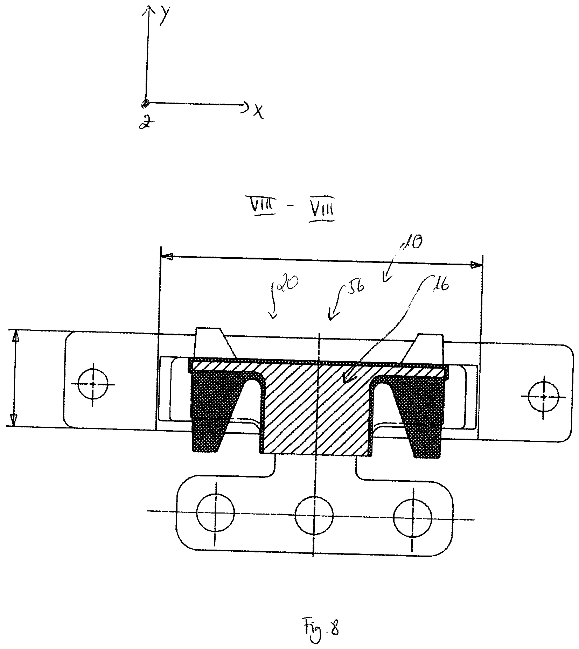

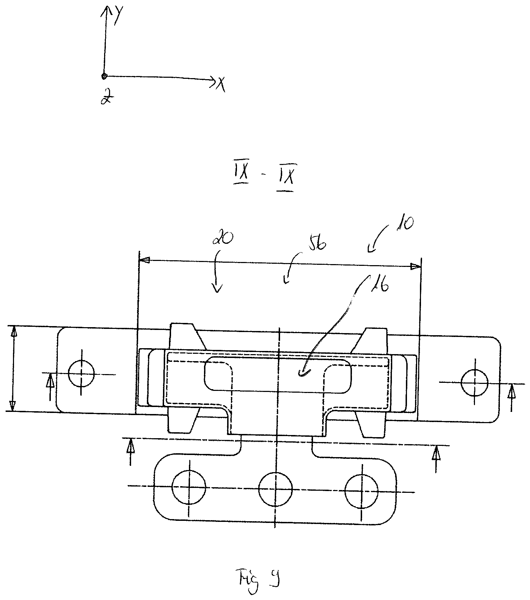

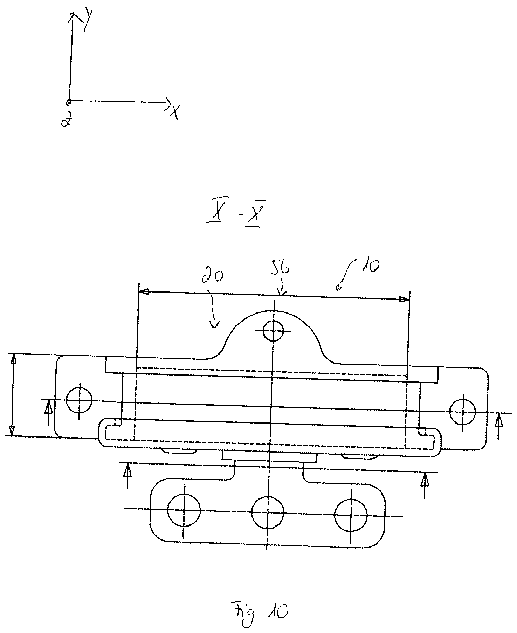

Die Fig. 6 bis 10 zeigen weitere Ansichten auf das Aggregatelager 10 mit und ohne Gehäuse 12.

Wie insbesondere in Fig. 1 und 2 zu sehen ist, sind die Funktionen des ersten Federkörpers 18 und des zweiten Federkörpers 20 entkoppelt voneinander.

Das bedeutet, dass zum Abstützen in z-und x-Richtung und zum Abstützen in y-Richtung jeweils ein getrennt voneinander ausgebildeter Federkörper 18, 20 vorgesehen. Dabei übernimmt der erste Federkörper 18 die Abstützung in z-und x-Richtung und der zweite Federkörper 20 die Abstützung in y-Richtung.

Durch diese Funktionstrennung kann das Aggregatelager 10 insgesamt sehr schmal ausgebildet werden, das heißt das Verhältnis aus Länge in x-Richtung zu Breite in y-Richtung des Aggregatelagers 10 ist groß. Dadurch kann das Aggregatelager 10 leicht in Einbausituationen verwendet werden, bei denen der Raum in eine y-Richtung begrenzt ist. Dennoch stellt das Aggregatelager 10 ausreichend hohe Federraten zur Abfederung eines Aggregates in alle drei Raumrichtungen zur Verfügung.

### Bezugszeichenliste

- 10: Aggregatelager
- 12: Gehäuse
- 14: Traglager
- 16: Auflager
- 18: Erster Federkörper
- 20: Zweiter Federkörper
- 22a/b: Puffer
- 23: elastomerer Werkstoff
- 24: Grundplatte
- 26: oberer Abschluss
- 28: Kern
- 29: Rücksprung
- 30a/b: Teilkörper
- 32: Raum
- 34: Erster Anschlagpuffer
- 36: Zweiter Anschlagpuffer
- 38: Aufnahme
- 39: Tragarm
- 40: Erste Gehäusewand
- 42: Zweite Gehäusewand
- 44: Bereich
- 46: Vertiefung
- 48: reibungserhöhende Innenwand
- 50: Radialansatz
- 52: dritter Anschlagspuffer
- 54: rechteckförmige Grundfläche
- 56a,b: Pufferpaar
- 60: Ummantelung

## Patentansprüche

1. Aggregatelager (10) mit einem Traglager (14) und einem Auflager (16), die durch einen ersten Federkörper (18) miteinander verbunden sind, wobei der erste Federkörper (18) zur Abstützung des Auflagers (16) in eine z-Richtung ausgebildet ist, wobei ein zweiter Federkörper (20) zur Abstützung des Auflagers (16) in eine y-Richtung ausgebildet ist, und wobei das Auflager (16) durch den zweiten Federkörper (20) elastisch nachgiebig an einem die beiden Federkörper (18, 20) umgebenden Gehäuse (12) abgestützt ist, **dadurch gekennzeichnet, dass** der zweite Federkörper (20) wenigstens zwei Pufferpaare (56a, 56b) aufweist, wobei ein erstes Pufferpaar (56a) gegenüber einem zweiten Pufferpaar (56b) in x-Richtung versetzt angeordnet ist, und dass jedes Pufferpaar (56a, 56b) wenigstens zwei quader- oder stollenförmig ausgebildete Puffer (22a, 22b) aufweist, die in z-Richtung versetzt angeordnet sind und jeweils unter elastischer Vorspannung an gegenüberliegenden Gehäusewänden (40, 42) des Gehäuses (12) anliegen, wobei die Puffer (22a, 22b) das Auflager (16) in entgegen gerichtete y-Richtungen abstützen.

2. Aggregatelager (10) nach Anspruch 1, **dadurch gekennzeichnet, dass** das Gehäuse (12) in dem Bereich, in dem die Puffer (22a, 22b) das Auflager (16) an dem Gehäuse (12) abstützen, Vertiefungen (46) aufweist, in die die Puffer (22a, 22b) einliegen.

3. Aggregatelager (10) nach einem der Ansprüche 1 bis 2, **dadurch gekennzeichnet, dass** das Gehäuse (12) eine reibungserhöhende Innenwand (48) aufweist.

4. Aggregatelager (10) nach einem der Ansprüche 1 bis 3, **dadurch gekennzeichnet, dass** die Puffer (22a, 22b) gegenüberliegend zu dem Bereich (44), an dem sie das Auflager (16) gegen das Gehäuse (12) abstützen, Radialansätze (50) als dritte Anschlagspuffer (52) der Puffer (22a, 22b) in y- und/oder z-Richtung aufweisen.

5. Aggregatelager (10) nach einem der Ansprüche 1 bis 4, **dadurch gekennzeichnet, dass** die Puffer (22a, 22b) in einen Rücksprung (29) eines Kerns (28) des Aggregatelagers (10) in x-Richtung eingebettet sind.

6. Aggregatelager (10) nach einem der Ansprüche 1 bis 5, **dadurch gekennzeichnet, dass** der erste Federkörper (18) eine rechteckförmige, runde, konusförmige oder ringförmige Tragfeder aufweist.

7. Aggregatelager (10) nach Anspruch 6, **dadurch gekennzeichnet, dass** der erste Federkörper (18) eine rechteckförmige Grundfläche (54) aufweist und vorzugsweise zwei keilförmig angeordnete Teilkörper (30a, 30b) umfasst.

8. Aggregatelager (10) nach einem der Ansprüche 1 bis 7, **dadurch gekennzeichnet, dass** wenigstens ein Anschlagpuffer (34, 36) vorgesehen ist, der die Auslenkung des Auflagers (16) in z-Richtung begrenzt.

9. Aggregatelager (10) nach einem der Ansprüche 1 bis 8, **dadurch gekennzeichnet, dass** an einer Grundplatte (24) des Traglagers (14) ein erster Anschlagpuffer (34) vorgesehen ist und/oder dass an dem Auflager (16) gegenüberliegend zu der Grundplatte (24) ein zweiter Anschlagpuffer (36) vorgesehen ist.

10. Aggregatelager (10) nach einem der Ansprüche 8 oder 9, **dadurch gekennzeichnet, dass** der erste Federkörper (18) und der zweite Federkörper (20) und/oder wenigstens der Anschlagpuffer (34, 36) einstückig aus einem elastomeren Werkstoff hergestellt sind.

11. Aggregatelager (10) nach Anspruch 10, **dadurch gekennzeichnet, dass** zum einstückigen Ausbilden der Federkörper (18, 20) und/oder des wenigstens einen Anschlagpuffers (34, 36) eine Ummantelung (60) aus einem elastomeren Werkstoff zum Ummanteln der Federkörper (18, 20) und/oder der Anschlagpuffer (34, 36) vorgesehen ist.

12. Aggregatelager (10) nach einem der Ansprüche 1 bis 11, **dadurch gekennzeichnet, dass** das Auflager (16) eine Aufnahme (38) für einen mit einem Aggregat verbindbaren Tragarm (39) aufweist.

## Claims

1. Power unit mount (10) having a first support (14) and a second support (16) which are connected to one another by a first spring body (18), the first spring body (18) being designed to support the second support (16) in a z-direction, wherein a second spring body (20) is designed to support the second support (16) in a y-direction, and wherein the second support (16) is supported in an elastically resilient manner by the second spring body (20) on a housing (12) enclosing the two spring bodies (18, 20), **characterised in that** that the second spring body (20) has at least two buffer pairs (56a, 56b), a first buffer pair (56a) being arranged offset in the x-direction with respect to a second buffer pair (56b), and **in that** each buffer pair (56a, 56b) has at least two cuboid-shaped or stud-shaped buffers (22a, 22b), which are arranged offset in the z-direction, each of which abutting opposite housing walls (40, 42) of the housing (12) under elastic prestress, wherein the buffers (22a, 22b) support the second support (16) in opposite y-directions.

2. Power unit mount (10) according to claim 1, **characterised in that** in the region in which the buffers (22a, 22b) support the second support (16) on the housing (12), the housing (12) has deepenings (46) into which the buffers (22a, 22b) engage.

3. Power unit mount (10) according to claim 1 or 2, **characterised in that** the housing (12) has a friction-enhancing inner wall (48).

4. Power unit mount (10) according to any one of claims 1 to 3, **characterised in that** the buffers (22a, 22b) have radial projections (50) as third stop buffers (52) of the buffers (22a, 22b) in the y-direction and/or z-direction opposite the region (44) in which they support the mount (16) on the housing (12).

5. Power unit mount (10) according to any one of claims 1 to 4, **characterised in that** the buffers (22a, 22b) are embedded in a recess (29) of a core (28) of the power unit mount (10) in the x-direction.

6. Power unit mount (10) according to any one of claims 1 to 5, **characterised in that** the first spring body (18) has a rectangular, round, conical or annular suspension spring.

7. Power unit mount (10) according to claim 6, **characterised in that** the first spring body (18) has a rectangular base (54) and preferably comprises two partial bodies (30a, 30b) arranged in the shape of a wedge.

8. Power unit mount (10) according to any one of claims 1 to 7, **characterised in that** at least one stop buffer (34, 36) is provided which limits the deflection of the second support (16) in the z-direction.

9. Power unit mount (10) according to any one of claims 1 to 8, **characterised in that** a first stop buffer (34) is provided on a base plate (24) of the first support (14) and/or a second stop buffer (36) is provided on the second support (16) opposite the base plate (24).

10. Power unit mount (10) according to claim 8 or 9, **characterised in that** the first spring body (18) and the second spring body (20) and/or at least one stop buffer (34, 36) are formed in one piece from an elastomeric material.

11. Power unit mount (10) according to claim 10, **characterised in that** for the one-piece formation of the spring bodies (18, 20) and/or the at least one stop buffer (34, 36), a coating (60) made of an elastomeric material is provided for coating the spring bodies (18, 20) and/or the stop buffers (34, 36).

12. Power unit mount (10) according to any one of claims 1 to 11, **characterised in that** the second support (16) has a receptacle (38) for a support arm (39) which can be connected to a power unit.

## Revendications

1. Palier de groupe (10) comprenant un palier porteur (14) et un appui (16) qui sont reliés l'un à l'autre par un premier corps de ressort (18), le premier corps de ressort (18) étant réalisé pour soutenir l'appui (16) dans une direction z, un deuxième corps de ressort (20) étant formé pour soutenir le support (16) dans une direction y, et l'appui (16) étant soutenu élastiquement de manière flexible par le deuxième corps de ressort (20) sur un boîtier (12) entourant les deux corps de ressort (18, 20), **caractérisé en ce que** le deuxième corps de ressort (20) présente au moins deux paires de tampons (56a, 56b), une première paire de tampons (56a) étant agencée en décalage dans la direction x par rapport à une deuxième paire de tampons (56b), et **en ce que** chaque paire de tampons (56a, 56b) présente au moins deux tampons (22a, 22b) réalisés en forme de parallélépipède ou de barrette qui sont agencés avec décalage dans la direction z et se trouvent chacun sous précontrainte élastique sur des parois (40, 42) opposées du boîtier (12), les tampons (22a, 22b) soutenant l'appui (16) dans des directions y opposées.

2. Palier de groupe (10) selon la revendication 1, **caractérisé en ce que** le boîtier (12) comporte, dans la zone dans laquelle les tampons (22a, 22b) soutiennent le support (16) sur le boîtier (12), des creux (46) dans lesquels les tampons (22a, 22b) s'engagent.

3. Palier de groupe (10) selon l'une des revendications 1 à 2, **caractérisé en ce que** le boîtier (12) présente une paroi intérieure (48) augmentant la friction.

4. Palier de groupe (10) selon l'une des revendications 1 à 3, **caractérisé en ce que** les tampons (22a, 22b) présentent, à l'opposé de la zone (44) sur laquelle ils soutiennent l'appui (16) contre le boîtier (12), des saillies radiales (50) servant de troisième tampon de butée (52) des tampons (22a, 22b) dans la direction y et/ou z.

5. Palier de groupe (10) selon l'une des revendications 1 à 4, **caractérisé en ce que** les tampons (22a, 22b) sont incorporés dans un ressaut (29) d'un noyau (28) du palier de groupe (10) dans la direction x.

6. Palier de groupe (10) selon l'une des revendications 1 à 5, **caractérisé en ce que** le premier corps de ressort (18) présente un ressort porteur rectangulaire, rond, conique ou annulaire.

7. Palier de groupe (10) selon la revendication 6, **caractérisé en ce que** le premier corps de ressort (18) présente une base rectangulaire (54) et comprend de préférence deux corps partiels agencés en coin (30a, 30b).

8. Palier de groupe (10) selon l'une des revendications 1 à 7, **caractérisé en ce qu'**il est prévu au moins un tampon de butée (34, 36) qui limite la déflexion de l'appui (16) dans la direction z.

9. Palier de groupe (10) selon l'une des revendications 1 à 8, **caractérisé en ce qu'**un premier tampon de butée (34) est prévu sur une plaque de base (24) du palier porteur (14) et/ou **en ce qu'**un deuxième tampon de butée (36) est prévu sur l'appui (16), à l'opposé de la plaque de base (24).

10. Palier de groupe (10) selon l'une des revendications 8 ou 9, **caractérisé en ce que** le premier corps de ressort (18) et le deuxième corps de ressort (20) et/ou au moins le tampon de butée (34, 36) sont fabriqués d'une seule pièce en matériau élastomère.

11. Palier de groupe (10) selon la revendication 10, **caractérisé en ce que**, pour réaliser en une seule pièce les corps de ressort (18, 20) et/ou ledit au moins un tampon de butée (34, 36), il est prévu un enrobage (60) en matériau élastomère pour enrober les corps de ressort (18, 20) et/ou les tampons de butée (34, 36).

12. Palier de groupe (10) selon l'une des revendications 1 à 11, **caractérisé en ce que** l'appui (16) présente un logement (38) pour un bras de support (39) qui peut être relié à un groupe.
